# EUROPEAN PATENT APPLICATION

(11) **EP 3 244 517 A1**
(43) Date of publication of application: **15.11.2017**
(21) Application number: 16168738.9
(22) Date of filing: 09.05.2016
(51) Int. Cl.: H02K 16/02, H02K 21/46, H02K 17/26

(54) **ROTOR FOR ROTATING ELECTRIC MACHINES HAVING MODULAR STRUCTURE**

(71) Applicant: ABB Schweiz AG, 5400 Baden (CH)
(72) Inventor: Castagnini, Alessandro, I-28100 Novara (IT); Secondo, Giulio, I-16125 Genova (IT); Termini, Pietro Savio, I-20010 Vittuone (MI) (IT); Tartaglino, Giovanni, I-20010 Vittuone (MI) (IT)
(74) Representative: Giavarini, Francesco

(57) **Abstract**

A rotor for a rotating electrical machine characterized in that it comprises a rotor core comprising a first plurality of laminations stacked in a rotor axial direction and forming first rotor module M1 having a first axial length L1, and a second plurality of laminations stacked in a rotor axial direction and forming second rotor module M2 having a second axial length L2, said first and second rotor modules M1 and M2 having an angular shift between them in the range of 0-180 electrical degrees.

## Description

The present invention relates to a rotor for a rotating machine, in particular to a rotor for an electrical motor having an improved modular structure.

Due to the developing standards and legislations regarding high efficiency motors and related efficiency classes, synchronous motor technologies are gaining more and more interest as a viable solution to obtain larger efficiency values with respect to induction motors, which are penalized by large rotor losses.

One of the big advantages of induction motor technology is the ability to "self-start" when connected to a power supply at fixed voltage and frequency. Synchronous motors do not have this ability, so their use in so-called "direct-on-line" (DOL) conditions is normally not admitted: a frequency converter is usually needed to drive a synchronous motor with controlled speed, so that it can start from zero speed and accelerate its load to the necessary application speed. However, a frequency converter is an additional component with its associated cost and in some applications it is not worth paying for it, thus preventing the use of more efficient motors.

A well-known method to give starting capability to a synchronous motor without using a frequency converter is embedding a so-called "starting cage" in the rotor structure, so that the motor gains the asynchronous characteristic needed to startup. When such a motor reaches a speed close to the synchronous speed, it "synchronizes" and works as a synchronous motor from that moment.

The following figures show some examples of existing designs that combine synchronous structure of the rotor with the presence of a starting cage. Figure 1 shows a typical design for a permanent magnet synchronous motor. Figure 2 and 3 respectively show typical designs for permanent magnet (PM) and synchronous reluctance motors, where 10 and 20 are the respective rotors, 11 and 21 the stators, 12 and 22 the shafts, 13 and 23 respectively the permanent magnets and the rotor cut outs, 14 and 24 the armature windings, and 15 and 25 the squirrel cage conductors.

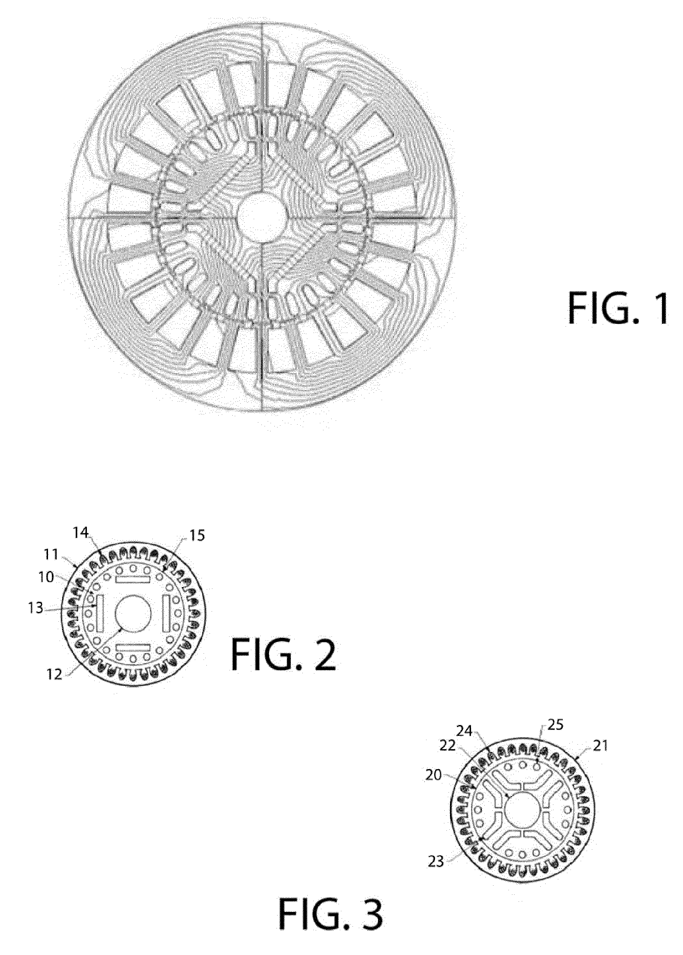

However the proposed solution can pose several problems or disadvantages in the resulting motor. In particular:
- the space needed for the starting cage 15, 25 forces a sub-optimal arrangement for the main synchronous technology on which the rotor 10, 20 is based. This is especially true for synchronous rotor not having a field winding, such as permanent magnet based rotors 10 and synchronous reluctance rotors 20 with or without PMs. As an example, the motor shown in Figure 1 could benefit from having permanent magnets 13 located closer to the air gap, but this is not possible because some space is needed for the starting cage 15. As another example, the motor shown in figure 3 could benefit from having a larger number of flux barriers 23, but this is again not possible because some space is needed for the starting cage 25;
- the design of the starting cage itself can be sub-optimal, because it must leave enough space for the main synchronous rotor technology, thus giving a starting torque vs. speed characteristic that is often not effective for many applications. As an example, the motor shown in figure 2 has small cage conductors 15, which is good to gain a high starting torque, but on the other hand produces a smaller torque at speed close to synchronous, and could thus make synchronization more difficult. As another example, the motor shown in figure 3 has a cage containing a smaller number of conductors 25, and/or conductors of different dimensions, and this could also adversely affect the starting characteristic;
- the mix of two different technologies can pose manufacturing problems because of the very high pressures and temperatures needed to manufacture the starting cage (usually made with aluminum die-casting). This also leads to sub-optimal design of rotor parts, from an electromagnetic point of view, to allow manufacturability. For example, the thin iron parts that separate cage conductors 15 from permanent magnet slot 13 in figure 2 must be thick enough to withstand the high pressure used to manufacture the cage, but they should also be thin enough so that motor performance is not decreased. A compromise between the two opposite needs leads to a compromise in performance.

Hence, the present disclosure is aimed at providing a rotor for a rotating electrical machine, which allows overcoming at least some of the above mentioned shortcomings.

Thus, in a first aspect, the present invention relates to a rotor for a rotating electrical machine which is characterized in that it comprises a rotor core comprising a first plurality of laminations stacked in a rotor axial direction and forming a first rotor module M1 having a first axial length L1, and a second plurality of laminations stacked in a rotor axial direction and forming a second rotor module M2 having a second axial length L2, said first and second rotor modules M1 and M2 being based on different rotor technologies. Preferably, said first and second rotor modules M1 and M2 have an angular shift between them in the range of -90 to +90 electrical degrees.

In practice, as better explained in the following description, the rotor according to the invention is provided with a modular rotor structure and can be built by combining together a number a rotor stacks, each based on a different technology, the different technologies becoming in such way combined together in the resulting motor. The modular rotor structure has several advantages and benefits that contribute to mitigate the effects of the previously described drawbacks, and in particular:
- different motor technologies can be combined in a single rotor;
- the "amount" of each single technology can be chosen according to the corresponding stack length;
- each single technology can be implemented in an optimized way, because no compromise is needed to be able to locate another different technology on the same stack.

The modular rotor according to the present invention allows for some additional advantages that are not directly related with the previous list of drawbacks, but can be exploited to obtain a motor that has better performances, or is more cost-effective, or is more suited to a specific application, as better explained in the detailed description.

Preferably -without limiting the invention to the specific technologies listed below- in the rotor according to the present invention said first and said second rotor modules M1 and M2 are selected from the group consisting of: a module of an asynchronous rotor with associated rotor winding; a module of an asynchronous rotor, complete with rotor squirrel cage and short circuit rings; a module of an asynchronous rotor, without cage or winding and short-circuit rings; a module of synchronous reluctance rotor; a module of synchronous reluctance rotor, whose flux barriers have been at least partly used to locate a conductive cage, and has short-circuit rings; a module of surface-mounted (SM) permanent magnet (PM) rotor; a module of interior PM (IPM) rotor; a module of PM-assisted synchronous reluctance rotor; a module of PM-assisted synchronous reluctance rotor, whose flux barriers have been at least partly used to locate a conductive cage; a module of PM-assisted synchronous reluctance rotor, whose flux barriers have been at least partly used to locate a conductive cage and has short circuit rings; a module of surface-mounted (SM) permanent magnet (PM) or of interior PM (IPM) rotor of the consequent pole type.

In practice, the rotor according to the invention is characterized in that said first and/or said second rotor modules M1 and M2 are provided with a plurality of recesses (slots, flux barriers or whatever), so that different rotor technologies can be recognized in them, both asynchronous and/or synchronous with or without a starting cage.

Advantageously, and depending on the needs, at least part of said recesses are at least partially filled with a material selected form the group consisting of: electrically conductive and magnetically insulating materials, electrically and magnetically insulating materials, hard magnetic materials (permanent magnets).

In some embodiments of the rotor according to the present invention, said first and/or said second rotor modules M1 and M2 can be provided with end-rings made of different materials. In further embodiments of the rotor according to the present invention, said first and second rotor modules M1 and M2 can be separated by a separating ring made of an electrically conductive and magnetically insulating material, or made of an electrically and magnetically insulating material.

In the above embodiments, when said first and/or said second rotor modules M1 and M2 are provided with a plurality of recesses which are at least partially filled with a material such as an electrically conductive and magnetically insulating material, or an electrically and magnetically insulating material, said end-rings and/or said separating ring can be mechanically continuous with the material filling said recesses.

In preferred embodiments of the rotor according to the present invention, said first and second rotor modules M1 and M2 have an angular shift between them in the range of -90 to +90 electrical degrees.

Although the following detailed description is mainly directed to a rotor comprising a first and second module, the present invention is of more general applicability and includes rotors having three or more modules.

In particular, in its more general definition, the rotor according to the present invention is characterized in that it comprises n pluralities of laminations stacked in a rotor axial direction and forming n rotor modules M*n*, the respective axial length Ln of said modules M*n* being equal or different form each other, at least two of said rotor modules M*n* having an angular shift between them in the range of -90 to +90 electrical degrees.

In general, in the rotor according to the present invention one or more of said rotor modules M*n* can be provided with a conductive cage and can have short circuit rings. For instance, a module can be provided with its own conductive cage and short circuit rings on both terminal ends; as an alternative, two adjacent modules can be electrically and/or mechanically connected by the same cage and each module can have a single short circuit ring at the end of the resulting assembly; as a further alternative, three (or more) adjacent modules can be electrically and/or mechanically connected by the same cage and the two terminal modules (i.e. the modules at the opposite ends of the resulting assembly) can have a single short circuit ring at the end of the resulting assembly, while the intermediate modules do not have any short circuit ring.

A rotating machine comprising a rotor as described in the present disclosure is also part of the present invention.

Further features and advantages of the present invention will be more clear from the description of preferred but not exclusive embodiments of a rotor for a rotating machine according to the invention, shown by way of examples in the accompanying drawings, wherein:
- Figure 1 is a view of a first embodiment of a conventional permanent magnet synchronous motor;
- Figure 2 is a view of a second embodiment of a conventional permanent magnet synchronous motor;
- Figure 3 is a view of a first embodiment of a conventional synchronous reluctance motor;

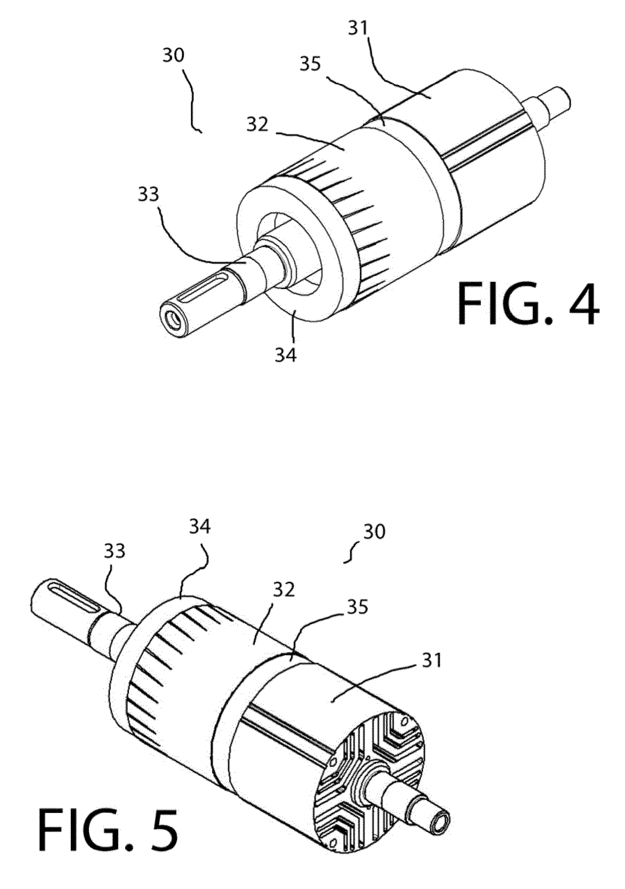

- Figures 4 is a first perspective view of a first embodiment of a rotor according to the invention;
- Figure 5 is a second perspective view of the embodiment of a rotor according to the invention of Figure 4;

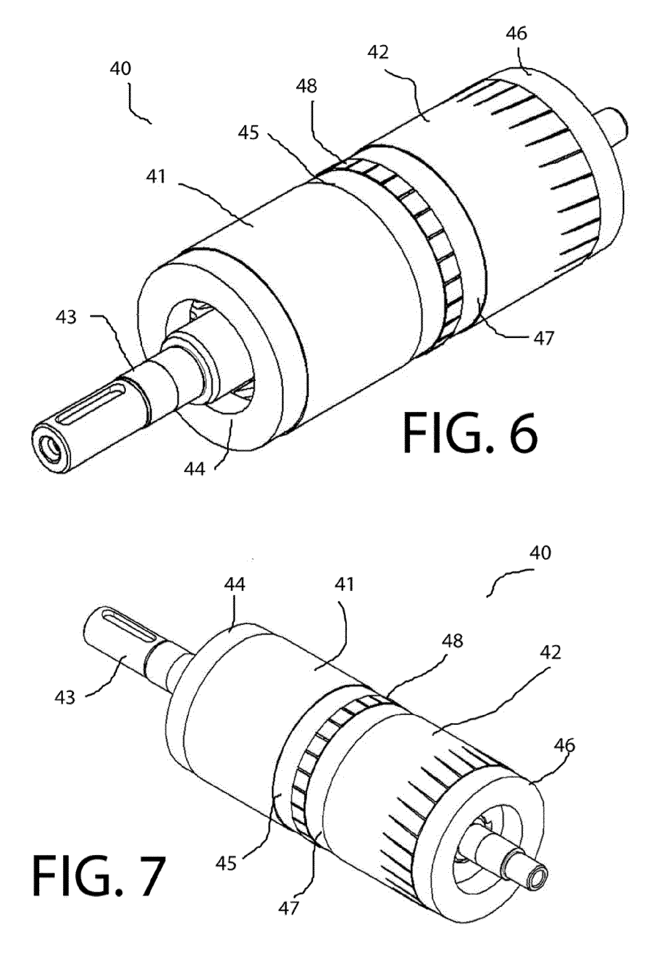

- Figure 6 is a first perspective view of a second embodiment of a rotor according to the invention;
- Figure 7 is a second perspective view of the embodiment of a rotor according to the invention of Figure 6.

With reference to figures 4-7, in its general definition, a rotor 30; 40 for a rotating electrical machine according to the present invention comprises a rotor core mounted on a shaft 33, 43 and comprising a first plurality of laminations 31; 41 which are stacked in a rotor axial direction and form a first rotor module M1 having a first axial length L1; the rotor core further comprises at least a second plurality of laminations 32; 42 which are stacked in a rotor axial direction and form a second rotor module M2 having a second axial length L2, said first and second rotor modules M1 and M2 being based on different rotor technologies.

The modular structure of the rotor according to the present invention brings about a number of possible benefits.

For example, two (or more) separate stacks of different technologies (e.g. asynchronous and synchronous) can be mounted together to obtain a mixed technology motor that has self-starting capability, as an asynchronous motor, but behaves as synchronous motor in normal operation.

As previously explained, this enables production of self-starting synchronous motors in which the asynchronous part can be designed according to known state of the art for asynchronous motors, because no compromise is needed to locate also the synchronous technology in the same space. At the same time, the synchronous part can also be designed according to known state of the art for the chosen synchronous design, because no compromise is needed to locate also the asynchronous technology in the same space. As a result, the performances will be the optimal for both the synchronous and asynchronous part.

An example of a modular rotor - in accordance with the invention - having such a structure is represented in figures 4 and 5, where the combination of an asynchronous stack 32 with end rings 34, 35 and a PM-assisted Synchronous Reluctance stack 31 is shown. The attached figures show a case where L1 = L2, but actual values can be different according to design requirements.

Indeed, the flexibility and modularity of the rotor of the present invention is also enhanced by the fact that - if L1 is the active length of the asynchronous stack, and L2 is the active length of the synchronous stack - the values of L1 and L2 can be chosen in order to obtain the desired performance in starting and normal operation.

As a further example of a modular rotor according to the invention, two (or more) separate stacks of different synchronous technologies can be mounted together to obtain a mixed technology synchronous motor where the "amount" of each single technology can be fine-tuned by choosing the active length L1 and L2 of the corresponding part. As in the previous case, each stack, for each single technology, can be designed using state-of-the-art techniques and optimizations for that specific technology, because no compromise is needed to locate two different technologies in the same stack, as in previous solutions.

This enables obtaining additional advantages according to the chosen coupled technologies. For example, it is possible to couple a synchronous reluctance stack of length L1 and a PM-assisted synchronous reluctance stack of length L2, choosing the amount L1 and L2 so that:
- the resulting motor is cost-effective (pure synchronous reluctance technology is cheaper because it does not contain magnets and does not involve all manufacturing problems related to magnet handling and assembly in the rotor stacks)
- the amount of L2, which is directly related to the amount of power factor increase produced by magnets with respect to the pure synchronous reluctance technology, can be chosen according to the needs of the application.

In a further embodiment of a modular rotor according to the invention, two (or more) separate stacks of different synchronous technologies can be mounted together with an angular shift between them, in the range of 0 - 180 degrees, to obtain a so-called "stepped skewing" among different technologies for the purpose of reducing the torque oscillation of the resulting motor. Furthermore, two (or more) separate stacks of different synchronous technologies can be mounted together with an angular shift between them, in the range of -90 to +90 electrical degrees, to fine-tune the direction of the two magnetic axes (usually called d and q) of the two different technologies, so that the resulting motor as a whole can have an optimized performance. This is particularly important when coupling different synchronous technologies, since each of them is optimally driven by controlling the direction of stator current to be at a specific angle with respect to axes d and q.

As a specific example, consider a motor where a Surface-Mounted PM (SMPM) stack of length L1 is coupled with a pure synchronous reluctance (SynRM) stack of length L2. SMPM motors are usually controlled with stator current completely in the q direction, while SynRM motors are usually controlled with current at a different angle, because both current components, d and q, are needed for motor excitation and torque production. A careful choice of the angular shift between the two stack allows obtaining the following benefits:
- the amounts L1 and L2 can be chosen so that the motor is cost effective (pure SynRM technology is cheaper that PM technology);
- the amount L1 can be chosen to increase the motor output torque, with respect to the pure synchronous reluctance case, according to the specific design requirements;
- the angular shift between the two stacks is chosen so that the supplied stator current is oriented in the correct direction for both stacks, i.e. along q axis for the SMPM stack and according to the design-specific direction for the SynRM stack. For example, if the SynRM stack is designed to have a current amount along -d equal to the current amount along q (thus having a current angle in the d-q plane of 135 deg), the angular shift will be such that these two current directions are actually aligned in the resulting rotor. This can be obtained with an angular shift of 45 electrical degrees between the reference axes of the two stacks, taking into consideration that usually a different convention is used for d-axis in the two mentioned technologies.

In a particular embodiment of the modular rotor according to the invention, two (or more) stacks based on the same or a different technology can be mounted together, with a separating ring between them, made of electrically conductive and magnetically insulating material, or of electrically and magnetically insulating material. For example, an asynchronous stack can be coupled with a Synchronous reluctance stack, in such a way that a squirrel cage can be created in both stack at the same time, and the squirrel cage in the asynchronous part is connected with the squirrel cage in the synchronous reluctance part by the interposed conductive ring. In this case the following benefits can be identified:
- the starting cage that can be built in the synchronous reluctance stack alone has a bad starting performance, because the main technology of that stack is synchronous, but this drawback is eliminated by adding also an asynchronous stack, optimized for starting;
- the joint manufacturing of the squirrel cage in the two stack has benefits from manufacturing point of view because it provide both electrical and mechanical connection between the two stacks, making handling of the final rotor easier.

In a further embodiment of a modular rotor according to the invention, two (or more) separate stacks of different technologies can be mounted together; aluminum is then cast to create a cage inside the whole rotor assembly as well as short circuit rings at the end of the whole rotor assembly.

As a further example, represented in figure 6 and 7, in a production setup where everything is optimized for producing a squirrel cage in each single stack, of any kind of technology, an asynchronous stack 42 can be coupled with a self-starting SynRM stack 41 (both stacks having already their own inbuilt squirrel cage with end rings 44,45 and 46,47), and an insulating ring 48 can be used to separate the two stacks. In this case the following benefits can be identified:
- standard stacks, whose production has already been separately optimized, can be used without modifications by just coupling them in a single rotor;
- since the two stack have been separately designed and optimized with respect to their own technology, any uncontrolled electrical interaction between them, which could destroy the benefits of optimization, can be avoided;
- their active lengths L1 and L2 can be chosen so that the specific application requirements are met.

As previously said, the rotor of the present invention is not limited to the combination of two rotor modules of different technology but, in general, it comprises *n* pluralities of laminations (31,32; 41,42) which are stacked in a rotor axial direction and form *n* rotor modules M*n*, the respective axial length L*n* of said modules M*n* being equal or different form each other, at least two of said rotor modules M*n* being based on different rotor technologies and having an angular shift between them in the range of -90 to +90 electrical degrees.

It is worth noting that in the modular rotor of the present invention, one or more of the above stacks can be made of two or more separate stacks of the same technology, mounted together with an angular shift between them, in the range 0 - 180 degrees, to obtain what is normally called a "stepped skewing" or "discrete skewing" (which is a known technique alternative to continuous skewing when this is not possible); in the state of the art the skewing angle is usually determined by the angle between stator slots and is aimed at reducing torque ripple. In this case we are taking into consideration also different angles to improve or modify electromagnetic behavior of the set of modules

For the purposes of the present invention, the term "rotor modules M*n* based on different rotor technologies" is meant to designate base components of a rotor, which can be combined with any number of similar or different base components to form a complete rotor, the base component being for example (but not limited to): a module of an asynchronous rotor with associated rotor winding; a module of an asynchronous rotor, complete with rotor squirrel cage and short circuit rings; a module of an asynchronous rotor, without cage or winding and short-circuit rings; a module of synchronous reluctance rotor; a module of synchronous reluctance rotor, whose flux barriers have been at least partly used to locate a conductive cage; a module of synchronous reluctance rotor, whose flux barriers have been at least partly used to locate a conductive cage and has short-circuit rings; a module of surface-mounted (SM) permanent magnet (PM) rotor; a module of interior PM (IPM) rotor; a module of PM-assisted synchronous reluctance rotor; a module of PM-assisted synchronous reluctance rotor, whose flux barriers have been at least partly used to locate a conductive cage; a module of PM-assisted synchronous reluctance rotor, whose flux barriers have been at least partly used to locate a conductive cage and has short-circuit rings; a module of surface-mounted (SM) permanent magnet (PM) or of interior PM (IPM) rotor of the consequent pole type.

As a result of combining two or more stacks, of possibly different technologies as previously described, several options are available regarding the possible connection between adjacent modules in the rotor, such as, but not limited to:
- two adjacent modules, of the same or different technology, which are not mechanically connected, but simply pushed or pressed as close to each other as possible
- two adjacent modules, of the same or different technology, that are separated by a ring of conductive or insulating material
- two adjacent modules, of the same or different technology, with or without separating rings, that may have mechanical continuity through the material filling the recesses of each module.

A rotating electrical machine, comprising a rotor as described herein is also part of the present invention.

Several variations can be made to the rotor for a rotating electrical machine thus conceived, all falling within the scope of the attached claims. In practice, the materials used and the contingent dimensions and shapes can be any, according to requirements and to the state of the art.

## Claims

1. A rotor (30; 40) for a rotating electrical machine **characterized in that** it comprises a rotor core comprising a first plurality of laminations (31; 41) stacked in a rotor axial direction and forming a first rotor module M1 having a first axial length L1, and a second plurality of laminations (32; 42) stacked in a rotor axial direction and forming a second rotor module M2 having a second axial length L2, said first and second rotor modules M1 and M2 being based on different rotor technologies.

2. The rotor (30; 40) according to claim 1, **characterized in that** said first and said second rotor modules M1 and M2 have an angular shift between them in the range of -90 to +90 electrical degrees.

3. The rotor (30; 40) according to claim 1 or 2, **characterized in that** said first and said second rotor modules M 1 and M2 are selected from the group consisting of: a module of an asynchronous rotor with associated rotor winding; a module of an asynchronous rotor, complete with rotor squirrel cage and short circuit rings; a module of an asynchronous rotor, without cage or winding and short-circuit rings; a module of synchronous reluctance rotor; a module of synchronous reluctance rotor, whose flux barriers have been at least partly used to locate a conductive cage; a module of synchronous reluctance rotor, whose flux barriers have been at least partly used to locate a conductive cage and has short-circuit rings; a module of surface-mounted (SM) permanent magnet (PM) rotor; a module of interior PM (IPM) rotor; a module of PM-assisted synchronous reluctance rotor; a module of PM-assisted synchronous reluctance rotor, whose flux barriers have been at least partly used to locate a conductive cage; a module of PM-assisted synchronous reluctance rotor, whose flux barriers have been at least partly used to locate a conductive cage and has short circuit rings; a module of surface-mounted (SM) permanent magnet (PM) or of interior PM (IPM) rotor of the consequent pole type.

4. The rotor (30; 40) according to one or more of the previous claims, **characterized in that** said first and/or said second rotor modules M1 and M2 are provided with a plurality of recesses.

5. The rotor (30; 40) according to claim 4, **characterized in that** at least part of said recesses are at least partially filled with a material selected form the group consisting of: electrically conductive and magnetically insulating materials, electrically and magnetically insulating materials, hard magnetic materials (permanent magnets).

6. The rotor (30; 40) according to one or more of the previous claims, **characterized in that** said first and/or said second rotor modules M1 and M2 is provided with at least one end-ring (34,35; 44,45; 46,47) made of different materials.

7. The rotor (30; 40) according to one or more of the previous claims, **characterized in that** said first and second rotor modules M1 and M2 are separated by a separating ring (48) made of an electrically conductive and magnetically insulating material, or made of an electrically and magnetically insulating material.

8. The rotor (30; 40) according to claim 6 or 7, **characterized in that** said first and/or said second rotor modules M1 and M2 are provided with a plurality of recesses which are at least partially filled with a material selected form the group consisting of:
electrically conductive and magnetically insulating materials, electrically and magnetically insulating materials, and further **characterized in that** said end-rings (34,35; 44,45; 46,47) and/or said separating ring (48) are mechanically continuous with the material filling said recesses.

9. The rotor (30; 40) according to one or more of the previous claims, **characterized in that** said first and second rotor modules M1 and M2 having an angular shift between them in the range of -90 to +90 electrical degrees.

10. The rotor (30; 40) according to one or more of the previous claims, **characterized in that** said first axial length L1 is equal to said second axial length L2.

11. The rotor (30; 40) according to one or more of the previous claims, **characterized in that** it comprises n pluralities of laminations (31,32; 41,42) stacked in a rotor axial direction and forming n rotor modules M*n*, the respective axial length Ln of said modules M*n* being equal or different form each other, at least two of said rotor modules M*n* being based on different rotor technologies.

12. The rotor (30; 40) according to claim 11, **characterized in that** at least two of said rotor modules M*n* have an angular shift between them in the range of 0-1-90 to +90 electrical degrees.

13. The rotor (30; 40) according to claim 11 or 12, **characterized in that** one or more of said rotor modules M*n* is provided with a conductive cage.

14. The rotor (30; 40) according to claim 13, **characterized in that** said one or more rotor modules M*n* is provided with one or more short circuit rings.

15. A rotating machine comprising a rotor (30; 40) according to one or more of the previous claims.
